**Europäisches Patentamt**

**European Patent Office**

**Office européen des brevets**

(19)

(11) Veröffentlichungsnummer: **0 193 863
B1**

(12) **EUROPÄISCHE PATENTSCHRIFT**

(45) Veröffentlichungstag der Patentschrift: **07.11.90**

(51) Int. Cl.⁵: **F 22 B 1/28, A 47 J 27/16**

(21) Anmeldenummer: **86102518.7**

(22) Anmeldetag: **26.02.86**

(54) Dampferzeuger, insbesondere für Gargeräte.

(30) Priorität: **08.03.85 IT 1981185**

(43) Veröffentlichungstag der Anmeldung:
**10.09.86 Patentblatt 86/37**

(45) Bekanntmachung des Hinweises auf die
Patenterteilung:
**07.11.90 Patentblatt 90/45**

(84) Benannte Vertragsstaaten:
**AT CH DE FR GB LI SE**

(56) Entgegenhaltungen:
**DE-A-2 161 480
DE-A-3 205 242
DE-A-3 410 247
US-A-2 785 271
US-A-2 861 169
US-A-3 419 666**

(73) Patentinhaber: **E.G.O. Italiana S.p.A.
Via per Cameri, 10
I-28100 Novara/Veveri (IT)**

(72) Erfinder: **Agradi, Guglielmo
Via Zanone, 2
I-28100 Novara/Veveri (IT)**
Erfinder: **Fusi, Guiseppe
Via XXV Aprile 33
I-Galliate/Novara (IT)**

(74) Vertreter: **Patentanwälte Ruff und Beier
Neckarstrasse 50
D-7000 Stuttgart 1 (DE)**

## Beschreibung

Die Erfindung betrifft einen Dampferzeuger, insbesondere für Gargeräte, mit einem Wasserkessel, der elektrische Rohrheizkörper zur Beheizung sowie einen oberhalb des vorbestimmten Wasserniveaus mündenden Anschluß als Dampfaustritt aufweist.

Die DE-A-34 10 247 beschreibt eine Einrichtung zur Dampferzeugung für den Hausgebrauch, bei der ein Temperaturfühler eines elektrischen Schaltsystems in wärmeleitender Verbindung mit einem im Wasserkessel angeordneten elektrischen Rohrheizkörper außen angebracht ist. Er schaltet eine Frischwasserzuführung ein, die den Wasserkessel füllt, wenn das Wasserniveau unter seine Position gesunken ist. Die Beendigung der Frischwasserzuführung wird über einen gesonderten Druckfühler vorgenommen, der nach entsprechender Füllung des Behälters das Ausschaltsignal erzeugt. Diese Ausführung ist aufwendig und von bestimmten Druckverhältnissen im System abhängig. Es kann nicht ausgeschlossen werden, daß durch eine zu starke Füllung auch Wasser in den Dampfaustritt eintritt.

Aus der DE-A-32 05 242 ist ein Kochendwasser-Bereiter bekanntgeworden, der möglichst keinen Dampf erzeugen soll und ein Dampfrohr nur zur Sicherung gegen Überdruck besitzt. Er hat einen in den Behälter eingesetzten Boden, auf den von unten Rohrheizkörper spiralig aufgebracht sind. Ein mit Abstand von den Rohrheizkörpern am Boden angebrachter Temperaturfühler eines nicht näher bezeichneten Reglers dient wahrscheinlich zur Temperaturbegrenzung. Die Probleme eines Dampferzeugers, insbesondere die Wasserzuführprobleme, treten dabei nicht auf, weil der Wasserstand sich durch ein Überlaufrohr bei jeder Wasserentnahme selbsttätig regelt.

Der Erfindung liegt die Aufgabe zugrunde, einen Dampferzeuger zu schaffen, der bei einfachem Aufbau robust im Betrieb und gegen Störungen durch Kalkabscheidung weitestgehend gesichert ist. Insbesondere soll auch eine vereinfachte Frischwasserzuführung den Betrieb problemlos gestalten.

Diese Aufgabe wird durch die Merkmale des Anspruchs 1 gelöst. Bei der Erfindung sind die hauptsächlich der Beheizung des Wasserkessels dienenden Rohrheizkörper an der Außenseite des Wasserkessels angebracht, so daß die insbesondere bei Dampferzeugern problematischen Kalkabscheidungen durch die Großflächigkeit der Beheizung in geringerem Maße auftreten und auch leicht zu entfernen sind. Durch die bevorzugte Anordnung des Wasserstandsmeß-Temperaturfühlers längs eines Rohrheizkörpers ist die Ansprechempfindlichkeit so zu bemessen, daß durch dieses Temperaturmeßsystem auch eine Wiederausschaltung der Frischwasserzuführung bewirkt werden kann, wenn das vorbestimmte Wasserniveau überschritten wird.

Außer zur Wasserstandsmessung und damit zur Konstanthaltung des Wasserniveaus im Wasserkessel kann zur Wasser-Temperaturregelung sowie zum Zwecke des Trockengehschutzes ferner jeweils ein Temperaturfühler eines mit einer Ausdehnungsflüssigkeit gefüllten elektrischen Schaltsystems eingesetzt werden. Auf empfindliche elektronische Schalt- und Meßsysteme kann vollständig verzichtet werden. Um ein feinfühliges Schalten mit geringer Schaltdifferenz zu gewählleisten, werden die Temperaturfühler für die Wasserstandsregulierung und für den Trokkengehschutz unmittelbar durch Rohrheizkörper beeinflußt, was durch gut wärmeleitende Verbindung mit einem Rohrheizkörper erzielt werden kann.

Überall dort, wo das Bedürfnis besteht, ein Fluid in intermittierender Feindosierung zuzuführen, also auch bei anderen Geräten als Dampferzeugern, ist eine Anordnung vorteilhaft, bei welcher erfindungsgemäß eine Fluid-Zuführung zum Zwecke der Ventilöffnung und Ventilschließung einen intermittierenden Ventil-Schaltantrieb aufweist. Dieser Schaltantrieb hat einen sehr einfachen und robusten Aufbau, wenn er zur Steuerung einen in einer beheizten Fluid-Zuführleitung umspült angeordneten Temperaturfühler eines mit einer Ausdehnungsflüssigkeit gefüllten elektrischen Schaltsystems aufweist. Fließt das Fluid bei geöffnetem Ventil, so kühlt der Temperaturfühler durch das ihn umspülende Fluid ab und bewirkt das Schließen des Ventiles. Dadurch wird die Kühlung des Fühlers durch das Fluid unterbrochen, der Fühler durch die kontinuierlich weiterbetriebene Beheizung wieder erwärmt und somit über den Fühler das Ventil wieder geöffnet, so daß ein weiterer Dosierzyklus beginnt. Die Beheizung ist zweckmäßig simultan mit der Beheizung für den Wasserkessel geschaltet, so daß sie nur bei Betrieb des Dampferzeugers arbeitet.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren, in Form von Unterkombinationen, bei einer Ausführungsform der Erfindung sowie auf anderen Gebieten verwirklicht sein können. Ausführungsbeispiele der Erfindung sind in den Zeichnungen dargestellt und werden im folgenden näher erläutert. Es zeigen:

Fig. 1 einen Dampferzeuger in perspektivischer Darstellung;

Fig. 2 einen Ausschnitt der Fig. 1 in Ansicht auf ein Ende;

Fig. 3 ein weiteres Ausführungsbeispiel eines Dampferzeugers in perspektivischer Ansicht;

Fig. 4 eine weitere Ausführungsform eines Dampferzeugers im Axialschnitt;

Fig. 5 ein Ausführungsbeispiel für eine intermittierend arbeitende Frischwasser-Zuführung in Ansicht;

Fig. 6 einen Ausschnitt der Fig. 5 in vergrößerter und teilweise geschnittener Darstellung;

Fig. 7 einen Schnitt nach der Linie VII-VII in Fig. 5.

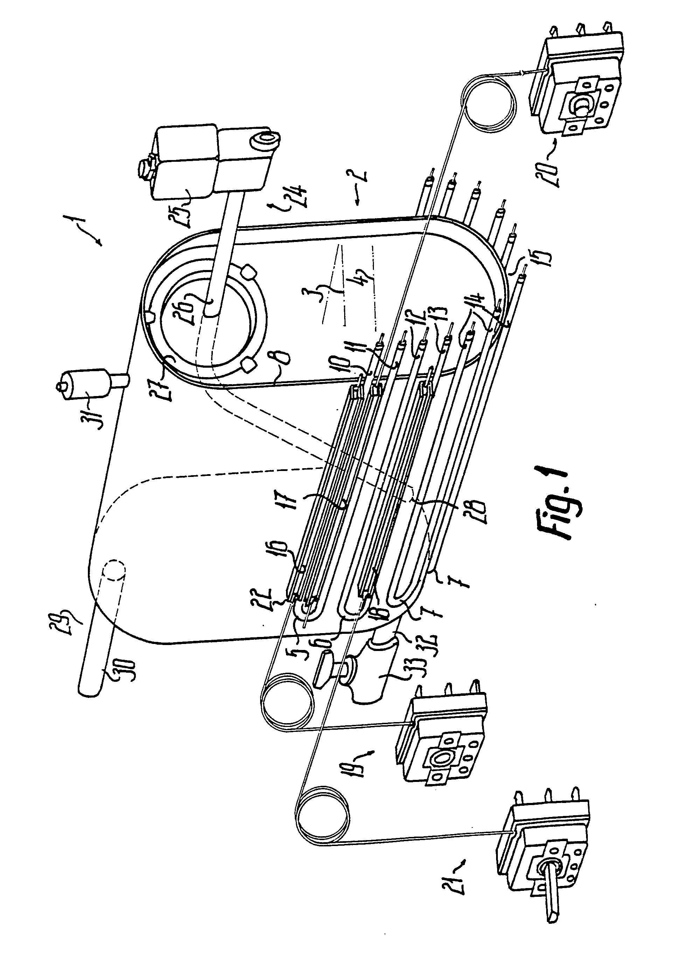

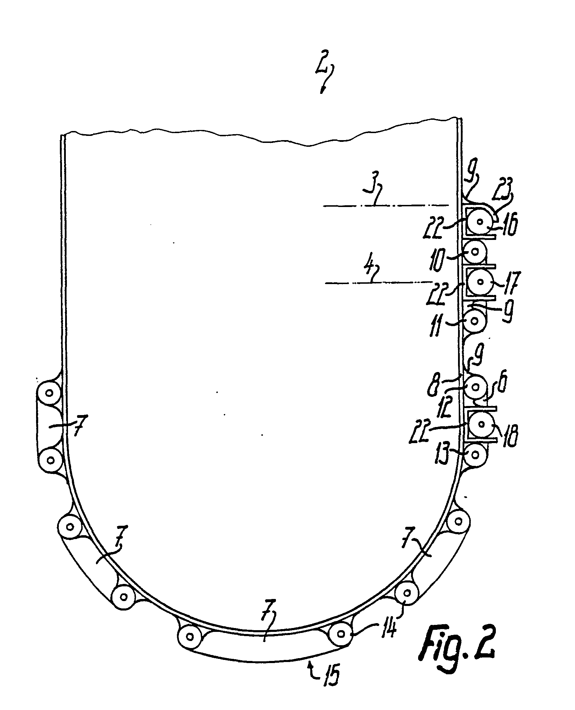

Der Dampferzeuger 1 gemäß Fig. 1, der zur Dampfversorgung für Gargeräte in Küchen o.dgl. ausgestaltet ist, weist einen im Vertikalschnitt aufrecht stehend langrunden Wasserkessel 2 aus Stahl o.dgl. auf, der im Betrieb etwa bis zur Hälfte seiner Höhe, nämlich bis zum maximalen Wasserniveau 3 mit Wasser gefüllt ist; das darunterliegende minimale Wasserniveau ist mit 4 bezeichnet. Etwa bis zur Höhe des maximalen Wasserniveaus 3 sind an der Außenseite der Wandung 8 des Wasserkessels 2 elektrische Widerstandsheizkörper in Form von Rohrheizkörpern 5 bis 7 gut wärmeleitend angebracht. Die wärmeleitende Verbindung kann durch Anlegieren erfolgen, d.h. durch Lotverbindungen 9 gemäß Fig. 2, welche Wärmeleitbrücken großer Querschnitte zwischen der Wandung 8 und den Rohrheizkörpern 5 bis 7 herstellen. Jeder der im wesentlichen gleich ausgebildeten Rohrheizkörper 5 bis 7 ist haarnadelförmig gebogen und bildet somit zwei parallele Schenkel 10, 11 bzw. 12, 13 bzw. 14. Alle Schenkel der Rohrheizkörper bilden parallele, horizontal und somit parallel zueinander liegende Schenkel, die in Abständen zueinander liegen, annähernd über die ganze Länge des Wasserkessels 2 reichen und mit ihren freien, zum Anschluß an elektrische Leitungen bestimmten Enden über dasselbe Ende des Wasserkessels 2 vorstehen. Die Rohrheizkörper 5 bis 7 gehen über die Unterseite 15 des Wasserkessels 2 durch.

An einer Seitenwand des Wasserkessels 2 sind drei stabförmige, horizontal sowie parallel zueinander liegende, annähernd über die ganze Länge des Wasserkessels 2 reichende Temperaturfühler 16, 17, 18 in gut wärmeleitender Verbindung mit der Wandung 8 angebracht, von denen der oberste Temperaturfühler 16 etwa in Höhe des Wasserniveaus 3 und oberhalb des höchsten Rohrheizkörpers 5 bzw. des obersten Schenkels 10 liegt. Der nächst untere Temperaturfühler 17 liegt unmittelbar an der Unterseite dieses obersten Rohrheizkörpers bzw. Schenkels 10, derart, daß letzterer von den beiden Temperaturfühlern 16, 17 beiderseits eng flankiert wird. Der tiefste, etwa in der Mitte der Höhe des Wasserniveaus 3 liegende Temperaturfühler 18 schließt sich eng an die Oberseite des unteren Schenkels 13 des zweithöchsten Rohrheizkörpers 6 an, zwischen dessen beiden Schenkeln 12, 13 er somit liegt. Jeder Temperaturfühler 16 bzw. 17 bzw. 18 ist Bestandteil eines mit einer Ausdehnungsflüssigkeit gefüllten elektrischen Schaltsystems 19 bzw. 20 bzw. 21, wobei alle Schaltsysteme im wesentlichen gleich ausgebildet sein können und der mit Ausdehnungsflüssigkeit gefüllte Innenraum des jeweiligen Temperaturfühlers über ein Kapillarrohr mit einer Ausdehnungsdose im zugehörigen Schalter verbunden ist.

Wie insbesondere Fig. 2 zeigt, ist jeder Temperaturfühler 16 bzw. 17 bzw. 18 in einem mindestens über seine Länge reichenden, im Querschnitt U-förmigen Aufnahmeprofil 22 aus gut wärmeleitendem Werkstoff, wie Stahl, angeordnet. Jedes Aufnahmeprofil 22 liegt mit der Außenseite seines Profil-Quersteges ganzflächig an der zugehörigen Außenseite der Wandung 8 des Wasserkessels 2 an und ist an dieser sowie am zugehörigen Schenkel 10 bzw. 13 des jeweiligen Rohrheizkörpers 5 bzw. 6 mit derselben Lotverbindung 9 wie dieser Schenkel durch Anlegieren befestigt. Der Temperaturfühler 16 bzw. 17 bzw. 18 liegt an den Innenflächen sowohl des Profilquersteges wie auch der Profil-Schenkel des zugehörigen Aufnahmeprofiles 22 im wesentlichen spielfrei an, wobei ein oder beide Profil-Schenkel im Bereich hintereinander liegender Längsabschnitte oder durchgehend über ihre Länge im Bereich des freien Endes durch Biegen derart gegen den Umfang des Temperaturfühlers gelegt sein können, daß sie einen den Temperaturfühler 16 bzw. 17 bzw. 18 an der vom Profil-Quersteg abgekehrten Seite eng umschließenden Haltestreifen 23 bilden. Durch den Haltestreifen 23 wird einerseits der Wärmeübertritt vom Aufnahmeprofil 22 zum Temperaturfühler verbessert und andererseits trotz Auswechselbarkeit des Temperaturfühlers ein sicherer Halt im Aufnahmeprofil erzielt.

Der oberste Temperaturfühler 16 dient mit dem zugehörigen Schaltsystem 19 zur automatischen Konstanthaltung des Wasserniveaus 3. Durch das etwa bis in Höhe des Temperaturfühlers 16 reichende Wasser im Wasserkessel 2 wird der Temperaturfühler 16 trotz der unmittelbaren Beheizung durch den Schenkel 10 des Rohrheizkörpers 5 unterhalb seiner Schalttemperatur gehalten. Sobald der Wasserspiegel durch Verdampfung unter ein vorbestimmtes Niveau abgesunken und damit der Temperaturfühler 16 nicht mehr ausreichend gekühlt ist, wird der Temperaturfühler 16 durch den Rohrheizkörper-Schenkel 10 über seine Schalttemperatur aufgeheizt, wodurch das zugehörige Schaltsystem 19 ein Magnetventil 25 einer Frischwasser-Zuführung 24 für den Wasserkessel 2 öffnet. Dadurch steigt der Wasserstand im Wasserkessel 2 wieder, bis durch Abkühlung des Temperaturfühlers 16 das Magnetventil 25 wieder geschlossen wird. Das Wasserniveau im Wasserkessel 2 wird also mit technisch sehr einfachen Mitteln innerhalb enger Grenzen konstant gehalten. Das außerhalb des Wasserkessels 2 liegende und an eine nicht näher dargestellte Versorgungsleitung angeschlossene Magnetventil 25 ist über eine Frischwasser-Zuführleitung 26 an den Wasserkessel 2 angeschlossen. Diese Zuführleitung 26 durchsetzt einen Deckel 27 des Wasserkessels 2, wobei dieser lösbare Deckel 27 eine stets vollständig oberhalb des Wasserniveaus 3 liegende Öffnung in einer Endwand des Wasserkessels 2 verschließt und diese Öfnung so groß ist, daß durch sie der gesamte Innenraum des Wasserkessels 2 zum Zwecke der Reinigung leicht zugänglich ist. Innerhalb des Wasserkessels 2 ist die Zuführleitung 26 nach unten gekrümmt, derart, daß ihr Austritt unterhalb des Wasserniveaus 3, vorzugsweise unterhalb der Hälfte der Höhe des Wasserniveaus 3, nämlich in unmittelbarer Nähe der tiefsten Zone des Wasserkessels 2 liegt sowie nach unten gerichtet ist.

Der Temperaturfühler 17 dient mit dem zugehörigen Schaltsystem 20 als Trockengehschutz, wobei das Schaltsystem 20 einen Sicherheitsthermostaten aufweist, der von Hand wieder einschaltbar ist. Sinkt das Wasserniveau wegen mangelnder Frischwasser-Zuführung unter einen vorbestimmten minimalen Wert, so wird der Temperaturfühler 17 infolge Fehlens der Kühlung durch das im Wasserkessel 2 befindliche Wasser vom zugehörigen Rohrheizkörper so weit bzw. über seine Schalttemperatur aufgeheizt, so daß über das zugehörige Schaltsystem 20 alle Rohrheizkörper abgeschaltet werden und eine Überhitzung nicht möglich ist.

Der Temperaturfühler 18 schließlich weist in seinem Schaltsystem 21 einen einstellbaren Temperaturregler auf und hält durch An- und Abschalten der Rohrheizkörper die Wassertemperatur im Wasserkessel 2 innerhalb vorbestimmter Grenzen. Die der eigentlichen Wasser-Beheizung des Wasserkessels 2 zugehörigen Rohrheizkörper liegen insgesamt unterhalb des Wasserniveaus 4 und reichen etwa bis zur Hälfte des maximalen Wasserniveaus 3, so daß also auf der den Temperaturfühlern 16 bis 18 gegenüberliegenden Seite des Wasserkessels 2 der höchste Rohrheizkörper 7 tiefer als der höchste Rohrheizkörper 5 liegt, welch letzterer insbesondere zur Beheizung der Temperaturfühler 16, 17 und damit zur Verringerung der Schaltdifferenz der zugehörigen Schaltsysteme vorgesehen ist. Entsprechend verringert auch der dem Temperaturfühler 18 zugehörige Rohrheizkörper 6 die Schaltdifferenz des Schaltsystemes 21.

Oberhalb des Wasserniveaus 3 ist im obersten Bereich der der Frischwasser-Zuführung 24 gegenüberliegenden Endwand des Wasserkessels 2 ein Anschluß 30 als Dampfaustritt 29 in Form eines Anschlußrohres vorgesehen. Der erfindungsgemäße Dampferzeuger 1 ist insbesondere zur Herstellung ungespannten Dampfes von wenig über 100°C, beispielsweise etwa 105°C, ausgebildet; dennoch ist es zweckmäßig, im oberen Bereich des Wasserkessels 2 ein Sicherheitsventil 31 in Form eines Überdruckventiles vorzusehen. Um den Wasserkessel 2 auf einfache Weise vollständig entleeren zu können, ist in seinem tiefsten Bereich ein Abflußrohr 32 angebracht, das mit einem handbetätigbaren Ventil 33 absperrbar ist. Das Abflußrohr 22 befindet sich unterhalb des Dampfaustrittes 29 an der zugehörigen Endwand.

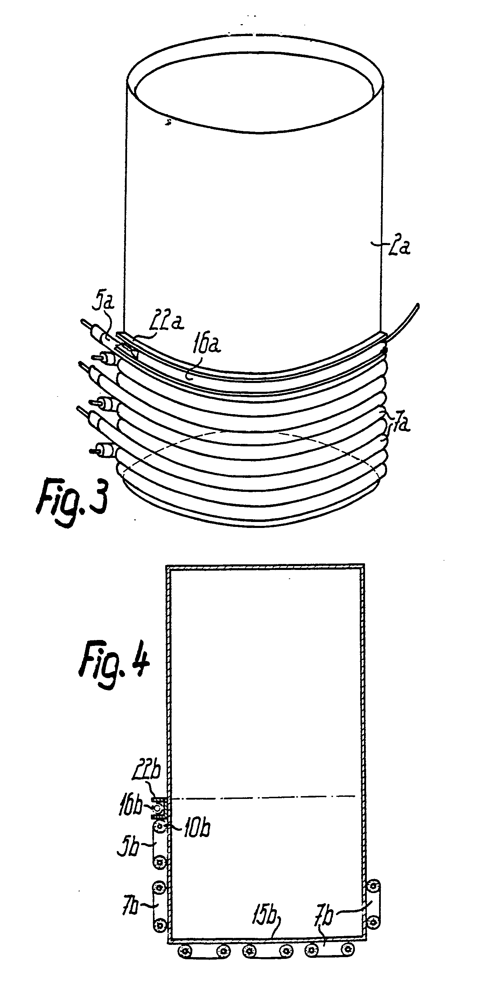

Wie Fig. 3 zeigt, kann der beispielsweise zylindrische Wasserkessel 2a auch stehend angeordnet und nur am Außenumfang mit Rohrheizkörpern 5a, 7a versehen sein. Im dargestellten Ausführungsbeispiel sind die Rohrheizkörper 5a, 7a um die Achse des Wasserkessels 2a gekrümmt an dessen Außenseite angebracht. In Fig. 3 ist nur ein oberster, beispielsweise zur Wasserstandsregulierung bestimmter Temperaturfühler 16a dargestellt, der in einem Aufnahmeprofil 22a angeordnet und ebenfalls um die Achse des Wasserkessels 2a derart gekrümmt ist, daß er unmittelbar an den höchsten Rohrheizkörper 5a anschließt.

Bei der Ausführungsform nach Fig. 4 sind die Rohrheizkörper 5b, 7b außer am Außenumfang des Wasserkessels 2b auch an der Außenseite von dessen ebener Bodenwand 15a angebracht, wodurch sich ebenfalls eine sehr effektive Wasser-Beheizung ergibt. Oberhalb des oberen Schenkels 10b des höchsten Rohrheizkörpers 5b ist der der Wasserstandsregulierung zugehörige Temperaturfühler 16b in einem Aufnahmeprofil 22b angeordnet.

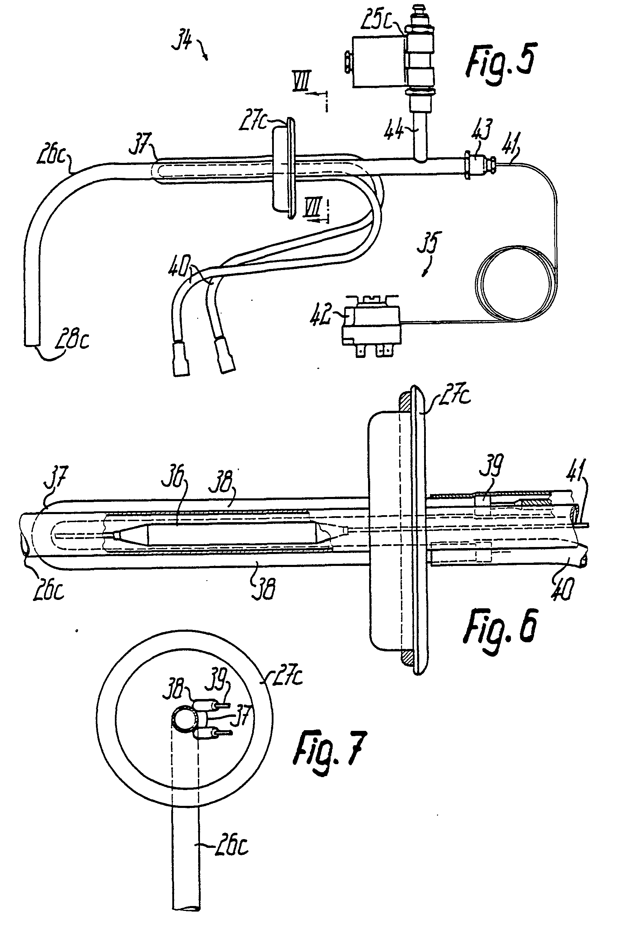

In den Fig. 5 bis 7 ist ein der Frischwasser-Zuführung 24 zugehöriger Ventil-Schaltantrieb 34 dargestellt, welcher baulich mit dem Magnetventil 25c, der den Austritt 28c bildenden Zuführleitung 26c und einem weiteren, mit einer Ausdehnungsflüssigkeit gefüllten und einen Temperaturfühler 36 einschließenden elektrischen Schaltsystem 35 vereint ist.

Der rohr- bzw. stabförmige Temperaturfühler 36 ist zwischen dem Magnetventil 25c und dem Austritt 28c in einem geradlinigen und zweckmäßig inerhalb des Wasserkessels liegenden Abschnitt der Zuführleitung 26c derart angeordnet, daß ein hinreichend großer Restquerschnitt für den Durchfluß des Frischwassers verbleibt. Über einen Längsabschnitt, der beiderseits über die Enden des Temperaturfühlers 36 hinausreicht, ist an der Außenseite der Zuführleitung 26c ein haarnadelförmig gekrümmter Rohrheizkörper 37 in gut wärmeleitender Verbindung, also ebenfalls zweckmäßig durch Anlegieren befestigt. Der lichte Abstand zwischen den parallelen Schenkeln 38 des Rohrheizkörpers 37 ist kleiner als der Durchmesser der Zuführleitung 26c, wobei beide Schenkel 38 annähernd über ihre gesamte Länge, nämlich bis zu ihren abgewinkelten, außerhalb des Wasserkessels liegenden Anschlußenden 39 eng an der Zuführleitung 26c anliegen. Die Anschlußenden 39 sind über Anschlußkabel 40 so mit den Schaltsystemen 20, 21 für die Rohrheizkörper 5 bis 7 verbunden, daß der Rohrheizkörper 38 gleichzeitig mit diesen Rohrheizkörpern 5 bis 7 in und außer Betrieb ist. Die Zuführleitung 26c durchsetzt einschließlich des Rohrheizkörpers 37 den Deckel 27c, an welchem sie tragend befestigt ist.

Vom Temperaturfühler 36 bis zum äußeren Ende ist die Zuführleitung 26c geradlinig, wobei das den Temperaturfühler 36 mit dem Temperaturregler 42 des Schaltsystemes 35 verbindende Kapillarrohr 41 den äußeren Endabschnitt der Zuführleitung 26c etwa koaxial durchsetzt und am äußeren Ende der Zuführleitung 26 durch eine Endmuffe 43 abgedichtet nach außen geführt ist. Zwischen dem Deckel 27c und der Endmuffe 43 ist das Magnetventil 25c über ein Querrohr 44 an die Zuführleitung 26c angeschlossen. Der auf eine vorbestimmte Schalttemperatur justierte Temperaturregler 42 bildet einen temperaturabhängig arbeitenden Schalter zum Öffnen und Schließen des Magnetventiles 25c. Bei geschlossenem Magnetventil 25c und damit bei nicht durchströmter Zuführleitung 26c wird der Temperaturfühler 36 durch den Rohrheizkörper 38 über die Schalttemperatur des Schaltsystems 35 aufgeheizt, wodurch der Temperaturregler 42 das Magnetventil 25c öffnet. Bei geöffnetem Magnetventil 25c fließt Frischwasser durch die Zuführleitung 26c, wobei der Temperaturfühler 36 infolge der Strömung und seiner Fesselung durch das Kapillarrohr 41 nach Art einer fliegenden Lagerung koaxial zur Zuführleitung 26c ausgerichtet und allseits umspült wird. Durch diese Umspülung wird der Temperaturfühler 36 wieder unter die Schalttemperatur des Schaltsystems 35 abgekühlt, so daß das Magnetventil 25c geschlossen und durch die darauf folgende Wiederaufheizung des Temperaturfühlers 36 ein weiterer Schaltzyklus eingeleitet wird. Der Temperaturfühler 36 ist in Fig. 7 der Übersichtlichkeit halber nicht dargestellt. Durch die intermittierende Frischwasser-Zuführung wird verhindert, daß die Temperatur im Wasserkessel 2 so stark absinkt, daß die Dampferzeugung unterbrochen wird. Trotz laufender Frischwasser-Zuführung ist also eine kontinuierliche Dampferzeugung gewährleistet. Dadurch ist der Dampferzeuger insbesondere zum Garen von Gemüsen und ähnlichen Speisen geeignet.

**Patentansprüche**

1. Dampferzeuger, insbesondere für Gargeräte, mit einem Wasserkessel, der elektrische Rohrheizkörper zur Beheizung sowie einen oberhalb des vorbestimmten Wasserniveaus mündenden Anschluß als Dampfaustritt aufweist, mit wenigstens einem Temperaturfühler (16, 17, 18) eines elektrischen Schaltsystems (19, 20, 21), der in wärmeleitender Verbindung mit wenigstens einem elektrischen Rohrheizkörper (5, 6, 7) angeordnet ist, und mit einer Frischwasserzuführung (24), die in Abhängigkeit von einem im Bereich des maximalen vorbestimmten Wasserniveaus (4) angeordneten Wasserstandsmeß-Temperaturfühler (16) Wasser in den Wasserkessel (2) einbringt, dadurch gekennzeichnet, daß der wenigstens eine Rohrheizkörper (5, 6, 7) an der Außenseite des Wasserkessels (2) angebracht ist und diesen beheizt, daß der mit Ausdehnungsflüssigkeit gefüllte Wasserstandsmeß-Temperaturfühler (16) längs eines Rohrheizkörpers (5) angeordnet ist und daß der Wasserstandsmeß-Temperaturfühler (16) ein Schaltsignal zur Betätigung eines Ventils zur Einleitung und Beendigung der Frischwasserzuführung für den Wasserkessel (2) abgibt.

2. Dampferzeuger nach Anspruch 1, dadurch gekennzeichnet, daß ein Temperaturfühler (17) als Trockengehschutz etwa in Höhe des vorbestimmten minimalen Wasserniveaus (4) in unmittelbar wärmeleitender Verbindung mit der Wandung (8) des Wasserkessels (2) und/oder mit einem Rohrheizkörper (5), vorzugsweise zwischen zwei Schenkeln (10, II) des dem Temperaturfühler (16) für die Wasserstandsmessung zugeordneten Rohrheizkörpers (5), angeordnet ist.

3. Dampferzeuger nach Anspruch 1 oder 2, dadurch gekennzeichnet, daß ein Temperaturfühler (18) zur Wasser-Temperaturregelung, vorzugsweise mit Abstand unterhalb der anderen Temperaturfühler (16, 17), am Wasserkessel (2) angebracht ist.

4. Dampferzeuger nach einem der vorhergehenden Ansprüche, dadurch gekennzeichnet, daß der jeweilige Temperaturfühler (16, 17, 18) in einem insbesondere U-förmigen Aufnahmeprofil (22) gehaltert ist, das seinerseits in wärmeleitender Verbindung an dem Wasserkessel (2) und/oder dem zugehörigen Rohrheizkörper (5, 6) angebracht ist und vorzugsweise wenigstens teilweise durch Biegung den Temperaturfühler (16, 17, 18) eng umschließt.

5. Dampferzeuger nach einem der vorhergehenden Ansprüche, dadurch gekennzeichnet, daß die wärmeleitende Verbindung (9) durch Anlegieren bzw. durch eine Einbettung in Lötwerkstoff gebildet ist.

6. Dampferzeuger nach einem der vorhergehenden Ansprüche, dadurch gekennzeichnet, daß die Rohrheizkörper (5, 6, 7) an wenigstens zwei einander gegenüberliegenden Seiten und insbesondere an der Unterseite (15) im wesentlichen horizontal annähernd über den Wasserkessel (2) durchgehend angeordnet sind, wobei vorzugsweise jeweils zwei benachbarte Heizkörper-Schenkel (10, 11 bzw. 12, 13 bzw. 14) durch einen U-förmigen Rohrheizkörper (5 bzw. 6 bzw. 7) gebildet sind.

7. Dampferzeuger nach einem der vorhergehenden Ansprüche, dadurch gekennzeichnet, daß die Frischwasser-Zuführung (24) einen intermittierenden Ventil-Schaltantrieb (34) aufweist, der zur Steuerung einen in einer beheizten Frischwasser-Zuführleitung (26c) umspült angeordneten Temperaturfühler (36) aufweist.

8. Dampferzeuger nach Anspruch 7, dadurch gekennzeichnet, daß die insbesondere mit dem dem Temperaturfühler (16) für die Wasserstandsmessung zugehörigen Rohrheizkörper (5) elektrisch geschaltete Beheizung der Frischwasser-Zuführleitung (26c) durch einen vorzugsweise U-förmig entlang der Zuführleitung (26c) im Bereich des etwa koaxial in dieser liegenden Temperaturfühlers (36) angeordneten Rohrheizkörper (37) gebildet ist.

9. Dampferzeuger nach einem der vorhergehenden Ansprüche, dadurch gekennzeichnet, daß die Frischwasser-Zuführleitung, insbesondere einschließlich der Beheizung und des Magnetventiles (25c) an einem eine Reinigungsöffnung des Wasserkessels (2) verschließenden Deckel (27c) angeordnet ist.

**Revendications**

1. Générateur de vapeur, en particulier pour appareils de cuisson, comprenant une cuve à eau qui présente des corps chauffants tubulaires électriques en vue du chauffage, ainsi qu'un raccord servant de sortie de vapeur et débouchant au-dessus du niveau d'eau prédéterminé; au moins une sonde thermométrique (16, 17, 18) d'un système de commutation électrique (19, 20, 21), qui est en liaison thermoconductrice avec au moins un corps chauffant tubulaire électrique (5, 6, 7); et une arrivée d'eau fraiche (24) qui admet de l'eau, dans la cuve à eau (2), en dépendance avec une sonde thermométrique (16) de mesurage du niveau d'eau, disposée dans la zone du niveau d'eau maximal prédéterminé (3), caractérisé par le fait que le corps chauffant tubulaire (5, 6, 7) prévu au minimum est placé à la face externe de la cuve à eau (2), et chauffe cette dernière; par le fait que la sonde thermométrique (16) de mesurage du niveau d'eau, emplie d'un fluide à expansion, est disposée le long d'un corps chauffant tubulaire (5); et par le fait que la sonde thermométrique (16) de mesurage du niveau d'eau délivre un signal de commutation pour l'actionnement d'une valve, en vue de l'amorçage et de l'achèvement de la délivrance d'eau fraiche à la cuve à eau (2).

2. Générateur de vapeur selon la revendication 1, caractérisé par le fait que, sensiblement à la hauteur du niveau d'eau minimal prédéterminé (4), une sonde thermométrique (17) remplissant la fonction d'une traversée protégée à sec est en liaison thermoconductrice directe avec la paroi (8) de la cuve à eau (2), et/ou avec un corps chauffant tubulaire (5), de préférence entre deux branches (10, 11) du corps chauffant tubulaire (5) associé à la sonde thermométrique (16) de mesurage du niveau d'eau.

3. Générateur de vapeur selon la revendication 1 ou 2, caractérisé par le fait qu'une sonde thermométrique (18) est installée sur la cuve à eau (2), en vue de la régulation de la température de l'eau, de préférence à distance au-dessous des autres sondes thermométriques (16, 17).

4. Générateur de vapeur selon l'une des revendications précédentes, caractérisé par le fait que la sonde thermométrique considérée (16, 17, 18) est retenue dans un logement profilé (22) notamment configuré en U, qui est à son tour en liaison thermoconductrice avec la cuve à eau (2) et/ou avec le corps chauffant tubulaire associé (5, 6), et qui ceinture étroitement la sonde thermométrique (16, 17, 18) par cintrage, de préférence au moins partiellement.

5. Générateur de vapeur selon l'une des revendications précédentes, caractérisé par le fait que la liaison thermoconductrice (9) est respectivement établie par alliage partiel ou par une inclusion dans un matériau de brasage.

6. Générateur de vapeur selon l'une des revendications précédentes, caractérisé par le fait que les corps chauffants tubulaires (5, 6, 7) s'étendent approximativement d'un trait sur la cuve à eau (2), pour l'essentiel horizontalement sur au moins deux côtés mutuellement opposés et notamment à la face inférieure (15), deux branches voisines considérées (10, 11, respectivement 12, 13, respectivement 14) de corps chauffants étant formées, de préférence, par un corps chauffant tubulaire (5, respectivement 6, respectivement 7) configuré en U.

7. Générateur de vapeur selon l'une des revendications précédentes, caractérisé par le fait que l'arrivée d'eau fraiche (24) présente un mécanisme distributeur d'actionnement intermittent (34) qui comporte, en vue de la commande, une sonde thermométrique (36) baignant dans le liquide à l'intérieur d'un conduit chauffé (26c) d'admission d'eau fraiche.

8. Générateur de vapeur selon la revendication 7, caractérisé par le fait que le chauffage du conduit (26c) d'admission d'eau fraiche, notamment branché électriquement avec le corps chauffant tubulaire (5) associé à la sonde thermométrique (16) de mesurage du niveau d'eau, est formé par un corps chauffant tubulaire (37) agencé, de préférence en U, le long du conduit d'admission (26c) et au voisinage de la sonde thermométrique (36) logée à peu près coaxialement dans ledit conduit.

9. Générateur de vapeur selon l'une des revendications précédentes, caractérisé par le fait que le conduit d'admission d'eau fraiche est implanté, en particulier conjointement au chauffage et à la valve électromagnétique (25c), sur un couvercle (27c) obturant un orifice de nettoyage de la cuve à eau (2).

**Claims**

1. Steam generator, particularly for cooking appliances, with a boiler, which has electric tubular heaters for heating purposes, as well as a connection as a steam outlet issuing above the predetermined water level, with at least one temperature sensor (16, 17, 18) of an electric switching system (19, 20, 21), which is in heat conducting connection with at least one electric tubular heater (5, 6, 7) and with a fresh water supply (24), which introduces water into the boiler (2) as a function of a water level measurement temperature sensor (16) located in the vicinity of the maximum predetermined water level (4), characterized in that the at least one tubular heater (5, 6, 7) is fitted to the outside of the boiler (2) and heats the latter, that the expansion liquid-filled water level measurement temperature sensor (16) is positioned along a tubular heater (5) and that the water level measurement temperature sensor (16) emits a switching signal for operating a valve for starting and finishing the fresh water supply for the boiler (2).

2. Steam generator according to claim 1, characterized in that, to prevent running dry, a temperature sensor (17) is positioned roughly at the predetermined minimum water level (4) in direct heat conducting connection with the wall (8) of the boiler (2) and/or with a tubular heater (5), preferably between two legs (10, 11) of the tubular heater (5) associated with the temperature sensor (16) for the water level measurement.

3. Steam generator according to claims 1 or 2, characterized in that a temperature sensor (18) for water temperature regulation is fitted to the boiler (2), preferably in spaced manner below the other temperature sensors (16, 17).

4. Steam generator according to one of the preceding claims, characterized in that the temperature sensor (16, 17, 18) is held in a U-shaped reception profile (22), which is in turn fitted in heat conducting manner to the boiler (2) and/or to the associated tubular heater (5,6) and preferably at least partly closely surrounds by bending the temperature sensor (16, 17, 18).

5. Steam generator according to one of the preceding claims, characterized in that the heat conducting connection (9) is formed by a soldered joint or by embedding in solder.

6. Steam generator according to one of the preceding claims, characterized in that the tubular heaters (5, 6, 7) are arranged on at least two facing sides and in particular on the underside (15) in a substantially horizontal manner extending approximately over the boiler (2) and preferably in each case two adjacent heater legs (10, 11 or 12, 13 or 14) are formed by a U-shaped tubular heater (5 or 6 or 7).

7. Steam generator according to one of the preceding claims, characterized in that the fresh water supply (24) has an intermittent valve switching drive (34) which, for control purposes, has a temperature sensor (36) around which a flow takes place and located in a heated fresh water supply line (26c).

8. Steam generator according to claim 7, characterized in that the heating means for the fresh water supply line (26c) electrically connected to the tubular heater (5) associated with the temperature sensor (16) for the water level measurement is formed by a preferably U-shaped tubular heater (37) arranged along the supply line (26c) in the vicinity of the temperature sensor (36) located roughly coaxially therein.

9. Steam generator according to one of the preceding claims, characterized in that the fresh water supply line, in particular including the heating means and the solenoid valve (25c), is placed on a lid (27c) closing a cleaning opening for the boiler (2).

Fig.1

EP 0 193 863 B1

Fig. 2

*Fig. 3*

5a
22a
16a
2a
7a

*Fig. 4*

22b
16b
10b
5b
7b
15b
7b

3

*Fig. 5*

*Fig. 6*

*Fig. 7*

4